# NEUE EUROPÄISCHE PATENTSCHRIFT

(11) **EP 1 835 303 B2**
(45) Veröffentlichungstag und Bekanntmachung des Hinweises auf die Entscheidung über den Einspruch: **09.08.2017**
(45) Hinweis auf die Patenterteilung: 02.04.2014
(21) Anmeldenummer: 07004411.0
(22) Anmeldetag: 03.03.2007
(51) Int. Cl.: G01S 15/87, G01S 15/93, G01S 7/52, G01S 7/527

(54) **Verfahren zum Betreiben eines Umgebungserkennungssystems eines Fahrzeugs, insbesondere eines Nahbereichserkennungs- oder Parkhilfesystems und zugehöriges System**
Method for operating a surroundings recognition system of a vehicle, in particular the recognition system for the immediate vicinity or parking assistance and corresponding system
Procédé de fonctionnement d'un système de reconnaissance d'environnement d'un véhicule, en particulier d'un système de reconnaissance de l'environnement proche ou d'aide au stationnement et système correspondant

(30) Priorität: 16.03.2006 DE 102006013936
(43) Veröffentlichungstag der Anmeldung: 19.09.2007
(73) Patentinhaber: Valeo Schalter und Sensoren GmbH, 74321 Bietigheim-Bissingen (DE)
(72) Erfinder: Heimberger, Markus, 71732 Tamm (DE); Gotzig, Heinrich, 74081 Heilbronn (DE); Hoffsommer, Klaus, 74321 Bietigheim-Bissingen (DE)
(74) Vertreter: Pothmann, Karsten

(56) Entgegenhaltungen:
- EP-A- 1 410 950
- EP-A1- 1 361 459
- EP-A2- 0 821 296
- EP-A2- 1 410 950
- DE-A1- 3 637 165
- DE-A1- 3 637 165
- DE-A1- 4 013 341
- DE-A1- 4 244 345
- DE-A1- 4 244 345
- DE-A1- 4 333 357
- DE-A1- 4 335 728
- DE-A1- 4 335 728
- DE-A1-102004 032 262
- DE-C1- 4 130 367
- SKUTEK M. ET AL: 'Fusion von Sensordaten am Beispiel von Sicherheitsanwendungen in der Automobiltechnik' AT-AUTOMATISIERUNGSTECHNIK Bd. 53, Juli 2005, Seiten 295 - 305
- HESSE S.: 'Lexikon Automatisierung der Arbeitssysteme', 1994, EXPERT VERLAG, RENNINGEN-MALMSHEIM Seiten 148, - 154-155
- HESSE S.: 'Lexikon Handhabungs-Einrichtungen und Industrie-Robotik', 1995, EXPERT VERLAG, RENNINGEN-MALMSHEIM Seiten 43, 70, - 130
- Ausstellungstexte des Deutschen Technikmuseums in Berlin, 12.12.2003
- Dissertation: "Leistungsfähigkeit fahrzeugautonomer Ortungsverfahren auf der Basis von Map-Matching-Techniken", Renate Czommer
- REICHEL H.R.: 'Elektronische Bremssysteme', Bd. 2.AUFL., 2001, EXPERT VERLAG, RENNINGEN Seiten 191 - 193
- Wikipedia Artikel "Dead reckoning" bezogen per Internet am 02.08.2016
- Wikipedia Artikel "Plausibilitätskontrolle" bezogen per Internet am 29.07.2015

## Beschreibung

Die Erfindung betrifft ein Verfahren zum Betreiben eines Umgebungserkennungssystems eines Fahrzeugs, insbesondere eines Nahbereicherkennungs- oder Parkhilfesystems, mit Sensoren zur Detektion von Objekten im Umgebungsbereich des Fahrzeugs, wobei im Betrieb des Fahrzeugs ein im Detektionsbereich der Sensoren vorhandenes Objekt erkannt und der Abstand und/oder die relative Lage des Objekts zum Fahrzeug bestimmt wird.

Derartige Verfahren und zugehörige Systeme sind aus dem Stand der Technik in vielfältiger Art und Weise bekannt, z.B. aus der Patentschrift DE 4 244 345 C2. Die Verfahren dienen dabei insbesondere zur Warnung des Fahrzeuglenkers vor Kollisionen und/oder zum Ergreifen von entsprechenden Maßnahmen in dem Falle, wenn eine Kollision unausweichlich auftreten wird.

Die Sensoren, die bei derartigen Systemen Verwendung finden, basieren in der Regel auf der Ultraschall- oder Radartechnologie. Insbesondere Ultraschallsensoren sind insbesondere beim Auftreten von Störschall störanfällig. Gerade beim Vorhandensein von Störschallquellen, wie beispielsweise Motorrädern oder Lastkraftwägen, im Nahbereich der Sensoren, werden von den Sensoren neben den eigentlichen Nutzsignalen Störsignale empfangen, die eine weitere Detektion von Objekten im Umgebungsbereich des Fahrzeugs unmöglich machen. Mit den bekannten Systemen kann dann keine weitere Erkennung der Objekte im Detektionsbereich der Sensoren stattfinden.

Der vorliegenden Erfindung liegt deshalb die Aufgabe zugrunde, trotz Vorhandensein von Störquellen beziehungsweise trotz Auftreten von Störsignalen ein sicheres Betreiben der bekannten Umgebungserkennungssysteme zu gewährleisten.

Diese Aufgabe wird bei einem eingangs beschriebenen Verfahren erfindungsgemäß dadurch gelöst, dass beim Auftreten und Erkennen von Störsignalen eine Änderung des Abstands und/oder der relativen Lage des Fahrzeugs zum Objekt mittels des vor dem Auftreten der Störsignale bestimmten Abstands und/oder der vor dem Auftreten der Störsignale bestimmten relativen Lage des Fahrzeugs zum Objekt sowie von anderen Fahrzeugsystemen erfassten Informationen bestimmt wird. Ein derartiges Verfahren hat den Vorteil, dass dann, wenn Störsignale auftreten und erkannt werden, Informationen zur Änderung des Abstands und/oder der relativen Lage des im Detektionsbereich vordem Auftreten der Störsignale erkannten Objekts herangezogen werden. Mittels diesen Informationen kann folglich bestimmt werden, ob sich das Fahrzeug dem zuvor erkannten Objekt weiter nähert und ob eine Kollisionsgefahr gegeben ist. Die von den anderen Fahrzeugsystemen erfassten Informationen sind dabei insbesondere unabhängig von einer möglicherweise auftretenden Störquelle und der daraus resultierenden Störsignale.

Für den Fall, dass Objekte im Detektionsbereich der Sensoren vorhanden sind, werden diese vorteilhafterweise gemeldet und/oder angezeigt. Eine Meldung an den Fahrzeuglenker kann dabei optisch oder akustisch erfolgen; insbesondere kann eine Anzeige auf einem Bildschirm erzeugt werden. Das Melden beziehungsweise Anzeigen erfolgt vorteilhafterweise in regelmäßigen zeitlichen Abständen.

Insbesondere dann, wenn Störsignale erkannt werden, kann eine zusätzliche Meldung oder Anzeige erfolgen. Dadurch kann dem Fahrzeuglenker mitgeteilt werden, dass die nunmehr erfolgende Meldung oder Anzeige der Änderung des Abstands und/oder der relativen Lage des Fahrzeugs zum Objekt gegebenenfalls weniger genau ist oder fehlerhaft sein kann.

Vorteilhafterweise handelt es sich bei den von den anderen Fahrzeugsystemen erfassten Informationen um Weggebersignale, Geschwindigkeitssignale, Kamerasignale und/oder Lenkwinkelsignale. Weggebersignale, Geschwindigkeitssignale und Lenkwinkelsignale werden insbesondere von Bremssystemen, Fahrzeugstabilisierungssystemen und/oder Navigationssystemen generiert und können deshalb problemlos zur Verfügung gestellt werden. Kamerasignale können beispielsweise aus einer Kameräüberwachung der Fahrzeugumgebung resultieren und können gegebenenfalls deshalb ebenfalls zur Verfügung gestellt werden. Die genannten Signale sind deshalb geeignet, weil mit ihnen die Richtung und der jeweilige Ort des Fahrzeugs bezüglich eines Referenzpunktes, bei dem es sich insbesondere um das von dem Umgebungserkennungssystem erkannten Objekt handeln kann, unabhängig von gegebenenfalls vorhandenen Störquellen bestimmt werden kann.

Die von diesen anderen Fahrzeugsystemen erfassten Informationen können vorteilhafterweise auf einem Bussystem des Fahrzeugs abgelegt werden, wobei das erfindungsgemäße Umfelderkennungssystem Zugriff auf dieses Bussystem hat. Insofern kann das erfindungsgemäße Umgebungserkennungssystem bei Auftreten von Störsignalen ohne Weiteres auf die von den anderen Fahrzeugsystemen erfassten Informationen zugreifen und eine Änderung des Abstands und/oder der relativen Lage des Fahrzeugs zum Objekt anhand dieser Informationen bestimmen.

Die eingangs genannte Aufgabe wird auch durch ein Umgebungserkennungssystem eines Fahrzeugs, insbesondere ein Nahbereicherkennungs- oder Parkhilfesystem gelöst, das im Betrieb das erfindungsgemäße Verfahren durchführt. Ein derartiges System umfasst zur Detektion des Umgebungsbereiches entsprechende Sensoren und ist vorteilhafterweise an das Bussystem des Fahrzeugs anbindbar.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben ist.

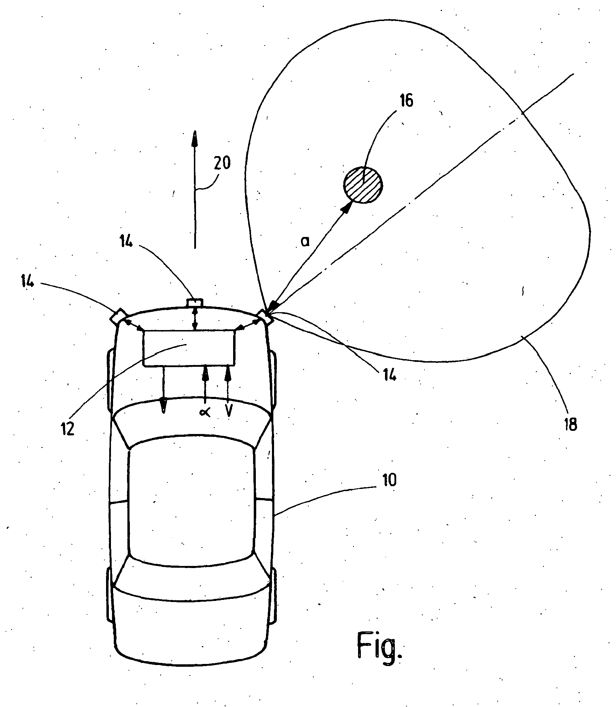

In der Figur ist dazu schematisch die Draufsicht auf ein Fahrzeug 10 dargestellt, das ein erfindungsgemäßes Parkhilfesystem 12 aufweist. Das Parkhilfesystem 12 umfasst dabei an der Frontseite des Fahrzeugs insgesamt drei Ultraschallsensoren 14. Die Ultraschallsensoren 14 senden dabei Schallsignale aus und empfangen in den Detektionsbereichen der Ultraschallsensoren reflektierte Nutzsignale. Wird, wie in der Figur 1 beispielhaft angedeutet, ein Objekt 16 im Detektionsbereich 18 eines Ultraschallsensors 14 erkannt, so kann beispielsweise aufgrund der Laufzeit der ausgesendeten und empfangenen Signale der Abstand a vom Fahrzeug zum Objekt erkannt werden. Ferner kann die relative Lage des Objekts zum Fahrzeug durch beispielsweise Verwendung von sogenannten Multibeamsensoren bestimmt werden.

Tritt nun der Fall ein, dass sich neben dem Fahrzeug 10 eine Störschallquelle, beispielsweise in Form eines ein starkes Schallsignal erzeugendes Motorrad befindet, so werden von den Sensoren 14 nicht nur Nutzsignale, sondern auch Störsignale empfangen. Das Parkhilfesystem 12 ist dabei derart ausgebildet, dass es aufgrund des Vergleichs der ausgesendeten und empfangenen Signale Störsignale erkennen kann. Werden derartige Störsignale erkannt, werden sämtliche empfangenen Signale unterdrückt. Ein Ausfiltern der Nutzsignale aus den empfangenen Störsignalen ist dabei, wenn überhaupt, technisch nur sehr schwer möglich.

Um bei unterdrückten empfangenen Signalen dennoch eine Änderung des Abstands a beziehungsweise der relativen Lage des Fahrzeugs 10 zum Objekt 16 bestimmen zu können, verwendet das Parkhilfesystem 12 ein von einem anderen Fahrzeugsystem erzeugtes Geschwindigkeitssignal v der jeweils momentanen Fahrzeuggeschwindigkeit und das Lenkwinkelsignal α des jeweils momentanen Lenkwinkels des Fahrzeugs. Aufgrund dieser beiden Signale kann das Parkhilfesystem 12 eine Änderung des Fahrzeugs im Raum ab dem Zeitpunkt berechnen, ab dem aufgrund des Auftretens und Erkennens der Störsignale keine zuverlässige Aussage über den Abstand beziehungsweise die Lage des Objekts 16 unter Verwendung der Ultraschallsensoren 14 mehr gemacht werden kann.

Bewegt sich das Fahrzeug beispielsweise in Richtung des Pfeils 20 mit der Geschwindigkeit v, so kann zum jeweiligen Zeitpunkt der jeweils aktuelle Abstand a zum Objekt berechnet werden.

Wird beispielsweise davon ausgegangen, dass im normalen Betrieb bei Nichtvorhandensein von Störsignalen alle 500 ms Abstandsinformationen des Fahrzeugs 10 zum Objekt 16 dem Fahrzeuglenker gemeldet werden, so kann beispielsweise folgender Fall auftreten:

Zum Zeitpunkt t = 0 wird das stationäre Objekt 16 vom vorderen rechten Ultraschallsensor 14 im Abstand a = 120 cm detektiert und dem Fahrzeuglenker gemeldet.

Zum Zeitpunkt t = 1 ms treten aufgrund eines sich dem Fahrzeug nähernden Motorrads für 2 s lang Störsignale auf.

Bewegt sich das Fahrzeug nicht, so beträgt zum Zeitpunkt t = 500 ms der Abstand vom Fahrzeug zum Objekt 16 nach wie vor 120 cm.

Bewegt sich nun ab dem Zeitpunkt t = 600 ms das Fahrzeug mit einer konstanten Geschwindigkeit von 1 m/s geradlinig auf das Objekt 16 zu, so hat das Fahrzeug bis zum zweiten Messzeitpunkt t = 1000 ms einen Weg von 40 cm zurückgelegt. Das Parkhilfesystem 12 kann aufgrund der ihm bekannten Geschwindigkeitsinformation nun berechnen, dass das Fahrzeug in 400 ms 40 cm Weg zurückgelegt hat, und dass der Abstand zum Hindernis im Zeitpunkt t = 1000 ms nur noch 80 cm beträgt. Dieser Wert kann dem Fahrzeuglenker 12 mitgeteilt werden.

Zum Zeitpunkt t = 1500 ms beträgt bei unveränderter Richtungsänderung des Fahrzeugs (das Fahrzeug fährt weiterhin geradlinig auf das Objekt 16 zu) der zwischen dem Zeitpunkt t = 1000 ms und T = 1500 ms zurückgelegte Weg 50 cm; das Fahrzeug hat nun nur noch einen Abstand von 30 cm zum Objekt 16. Aufgrund einer entsprechenden Mitteilung an den Fahrzeuglenker kann dieser ausreichend gewarnt werden, trotz immer noch vorhandener Störsignale und der daraus resultierenden Nichtberücksichtigung der Eingangssignale der Ultraschallsensoren 14. Der Fahrzeuglenker könnte das Fahrzeug anhalten, bevor es zur Kollision kommt.

## Patentansprüche

1. Verfahren zum Betreiben eines Umgebungserkennungssystems (12) eines Fahrzeugs (10), insbesondere eines Nahbereicherkennungs- oder Parkhilfesystems, mit Ultraschallsensoren (14) zur Detektion von Objekten (16) im Umgebungsbereich des Fahrzeugs, wobei im Betrieb des Systems ein im Detektionsbereich (18) der Ultraschallsensoren (14) vorhandenes Objekt (16) erkannt, der Abstand (a) des Objekts (16) zum Fahrzeug (10) bestimmt wird, und das Vorhandensein des Objekts (16) im Detektionsbereich (18) der Ultraschallsensoren (14) gemeldet und/oder angezeigt wird, **dadurch gekennzeichnet, dass** während des Auftretens und Erkennens von Störsignalen, die von einer Störschallquelle herrühren, eine Änderung des Abstands (a) mittels des vor dem Auftreten der Störsignale bestimmten Abstands (a) sowie von anderen Fahrzeugsystemen erfassten Informationen (v, α) bestimmt und dem Fahrzeuglenker gemeldet oder angezeigt wird, wobei es sich bei den von den anderen Fahrzeugsystemen erfassten Informationen um Weggebersignale, Geschwindigkeitssignale (v), Kamerasignale und/oder Lenkwinkelsignale (α) handelt.

2. Verfahren zum Betreiben eines Umgebungserkennungssystems (12) eines Fahrzeugs (10), insbesondere eines Nahbereicherkennungs- oder Parkhilfesystems, mit Ultraschallsensoren (14) zur Detektion von Objekten (16) im Umgebungsbereich des Fahrzeugs, wobei im Betrieb des Systems ein im Detektionsbereich (18) der Ultraschallsensoren (14) vorhandenes Objekt (16) erkannt, die relative Lage des Objekts (16) zum Fahrzeug (10) bestimmt wird und das Vorhandensein des Objekts (16) im Detektionsbereich (18) der Ultraschallsensoren (14) gemeldet und/oder angezeigt wird, **dadurch gekennzeichnet, dass** während des Auftretens und Erkennens von Störsignalen, die von einer Störschallquelle herrühren, eine Änderung der relativen Lage des Fahrzeugs zum Objekt mittels der vor dem Auftreten der Störsignale bestimmten relativen Lage des Fahrzeugs zum Objekt sowie von anderen Fahrzeugsystemen erfassten Informationen (v, α) bestimmt und dem Fahrzeuglenker gemeldet oder angezeigt wird, wobei es sich bei den von den anderen Fahrzeugsystemen erfassten Informationen um Weggebersignale, Geschwindigkeitssignale (v), Kamerasignale und/oder Lenkwinkelsignale (α) handelt.

3. Verfahren nach Anspruch 1 oder 2, **dadurch gekennzeichnet, dass** das Auftreten von Störsignalen gemeldet und/oder angezeigt wird.

4. Verfahren nach wenigstens einem der vorhergehenden Ansprüche, **dadurch gekennzeichnet, dass** das System (12) mit einem Bussystem des Fahrzeugs verbunden ist und die von den anderen Fahrzeugsystemen erfassten Informationen auf dem Bussystem abgelegt sind.

5. Umgebungserkennungssystem (14) eines Fahrzeugs, insbesondere eines Nahbereichserkennungs- oder Parkhilfesystems, das im Betrieb das Verfahren nach wenigstens einem der vorhergehenden Ansprüche durchführt.

## Claims

1. Method for operating a surroundings detection system (12) of a vehicle (10), in particular a system for detecting the immediate vicinity or a parking assistance system, having ultrasound sensors (14) for detecting objects (16) in the area surrounding the vehicle, wherein while the system is operating an object (16) which is present in the detection range (18) of the ultrasound sensors (14) is detected, the distance (a) of the object (16) from the vehicle (10) is determined, and the presence of the object (16) in the detection range (18) of the ultrasound sensors (14) is signalled and/or displayed, **characterized in that**, during the occurrence and detection of interference signals which originate from an interference sound source, a change in the distance (a) is determined by means of the distance (a) determined before the occurrence of the interference signals and information (v, α) detected by other vehicle systems and is signalled or displayed to the vehicle driver, wherein the information detected by the other vehicle systems comprises position transducer signals, speed signals (v), camera signals and/or steering angle signals (α).

2. Method for operating a surroundings detection system (12) of a vehicle (10), in particular a system for detecting the immediate vicinity or a parking assistance system, having ultrasound sensors (14) for detecting objects (16) in the area surrounding the vehicle, wherein while the system is operating an object (16) which is present in the detection range (18) of the ultrasound sensors (14) is detected, the relative position of the object (16) with respect to the vehicle (10) is determined, and the presence of the object (16) in the detection range (18) of the ultrasound sensors (14) is signalled and/or displayed, **characterized in that**, during the occurrence and detection of interference signals which originate from an interference sound source, a change in the relative position of the vehicle with respect to the object is determined by means of the relative position of the vehicle with respect to the object determined before the occurrence of the interference signals and information (v, α) detected by other vehicle systems and is signalled or displayed to the vehicle driver, wherein the information detected by the other vehicle systems comprises position transducer signals, speed signals (v), camera signals and/or steering angle signals (α).

3. Method according to Claim 1 or 2, **characterized in that** the occurrence of interference signals is signalled and/or displayed.

4. Method according to at least one of the preceding claims, **characterized in that** the system (12) is connected to a bus system of the vehicle and the information which is detected by the other vehicle systems is stored on the bus system.

5. Surroundings detection system (14) of a vehicle, in particular a system for detecting the immediate vicinity or a parking assistance system, which carries out the method according to at least one of the preceding claims during operation.

## Revendications

1. Procédé de conduite d'un système (12) de reconnaissance de l'environnement d'un véhicule (10), en particulier pour la conduite d'un système de reconnaissance de proximité ou d'un système d'assistance aux manoeuvres de stationnement, qui présente des capteurs à ultrasons (14) de détection d'objets (16) présents dans l'environnement du véhicule, et dans lequel lorsque le système est en fonctionnement, un objet (16) présent dans la plage de détection (18) des capteurs à ultrasons (14) est détecté, la distance (a) de l'objet (16) par rapport au véhicule (10) est déterminée et la présence de l'objet (16) dans la plage de détection (18) des capteurs à ultrasons (14) est communiquée et/ou affichée, **caractérisé en ce que**
pendant l'apparition et la détection de signaux parasites qui proviennent d'une source de bruit parasite, une modification de la distance (a) est définie au moyen de la distance (a) qui prévalait avant l'apparition des signaux parasites ainsi qu'à l'aide d'informations (v, α) saisies par d'autres systèmes du véhicule et est communiquée au conducteur du véhicule ou affichée,
les informations saisies par les autres systèmes du véhicule étant des signaux de trajectoire, des signaux de vitesse (v), des signaux de caméras et/ou des signaux d'angle de braquage (α).

2. Procédé de conduite d'un système (12) de reconnaissance de l'environnement d'un véhicule (10), en particulier pour la conduite d'un système de reconnaissance de proximité ou d'un système d'assistance aux manoeuvres de stationnement, qui présente des capteurs à ultrasons (14) de détection d'objets (16) présents dans l'environnement du véhicule, et dans lequel lorsque le système est en fonctionnement, un objet (16) présent dans la plage de détection (18) des capteurs à ultrasons (14) est détecté, la position relative de l'objet (16) par rapport au véhicule (10) est déterminée et la présence de l'objet (16) dans la plage de détection (18) des capteurs à ultrasons (14) est communiquée et/ou affichée,
**caractérisé en ce que**
pendant l'apparition et la détection de signaux parasites qui proviennent d'une source de bruit parasite, une modification de la position relative du véhicule par rapport à l'objet est définie au moyen de la position relative du véhicule par rapport à l'objet qui prévalait avant l'apparition des signaux parasites ainsi qu'à l'aide d'informations (v, α) saisies par d'autres systèmes du véhicule et est communiquée au conducteur du véhicule ou affichée,
les informations saisies par les autres systèmes du véhicule étant des signaux de trajectoire, des signaux de vitesse (v), des signaux de caméras et/ou des signaux d'angle de braquage (α).

3. Procédé selon les revendications 1 ou 2,
**caractérisé en ce que** l'apparition de signaux parasites est communiquée et/ou affichée.

4. Procédé selon au moins l'une des revendications précédentes, **caractérisé en ce que** le système (12) est raccordé à un système de bus du véhicule et **en ce que** les informations saisies par les autres systèmes du véhicule sont transmises au système de bus.

5. Système (14) de reconnaissance de l'environnement d'un véhicule, en particulier un système de reconnaissance de proximité ou un système d'assistance aux manoeuvres de stationnement, qui exécute en fonctionnement le procédé selon au moins l'une des revendications précédentes.
